# EUROPÄISCHE PATENTSCHRIFT

(11) **EP 2 030 959 B1**
(45) Veröffentlichungstag und Bekanntmachung des Hinweises auf die Patenterteilung: **14.04.2010**
(21) Anmeldenummer: 07016876.0
(22) Anmeldetag: 28.08.2007
(51) Int. Cl.: C04B 35/48, C04B 35/583, B22D 11/04

(54) **Gesinterte, polykristalline Mischwerkstoffe auf Basis von Bornitrid und Zirkoniumdioxid, Verfahren zu deren Herstellung und deren Verwendung**
Sintered polycrystalline mixed raw materials based on bornitiride and zirconium dioxide, method for their manufacture and their use
Matières premières composites polycristallines frittées à base de bornitride et de dioxyde de zirconium, leur procédé de fabrication et leur utilisation

(43) Veröffentlichungstag der Anmeldung: 04.03.2009
(73) Patentinhaber: ESK Ceramics GmbH & Co.KG, 87437 Kempten (DE)
(72) Erfinder: Eichler, Jens, Dr., 87439 Kempten (DE); Victor, Georg, 87439 Kempten (DE); Holzmüller, Bernhard, Dr., 87490 Haldenwang (DE); Uibel, Krishna, Dr., 87435 Kempten (DE)
(74) Vertreter: TER MEER - STEINMEISTER & PARTNER GbR

(56) Entgegenhaltungen:
- EP-A- 1 518 844
- WO-A-98/01405
- JP-A- 2003 286 076
- JP-A- 2005 028 441
- YOSHIDA H ET AL: "VERY HIGH-PRESSURE SINTERING OF CUBIC BORON NITRIDE WITH PSZ ADDITIVE" JOURNAL OF THE CERAMIC SOCIETY OF JAPAN, INTERNATIONAL EDITION, FUJI TECHNOLOGY PRESS, TOKYO, JP, Bd. 99, Nr. 1, Januar 1991 (1991-01), Seiten 95-98, XP000234503 ISSN: 0912-9200

## Beschreibung

Die Erfindung betrifft gesinterte, polykristalline Mischwerkstoffe auf Basis von Bornitrid und Zirkoniumdioxid, ein Verfahren zu deren Herstellung sowie die Verwendung solcher Mischwerkstoffe für metallurgische Anwendungen.

### Hintergrund der Erfindung

Auf dem Gebiet des Stranggießens von Stahl sind neben den bekannten Senkrecht- und Bogengießanlagen auch bereits Horizontalanlagen entwickelt worden. Die Vorteile des horizontalen Stranggießens gegenüber dem konventionellen Stranggießen sind geringe Bauhöhe und Baukosten der Anlage, Schutz der Schmelze vor Rückoxidation und keine Verformung des Stranges. Horizontal-Stranggießanlagen sind daher besonders geeignet zum Vergießen von kleineren Schmelzen, hochlegierten Sonderstählen und einfachen Baustählen in kleineren Mengen.

Beim horizontalen Stranggießen von Stahl ist die Kokille luftdicht mit einem Verteilergefäß verbunden. Die Erstarrung des Stahls, das heißt die Bildung der Strangschale in der Kokille, erfolgt daher nicht wie bei allen anderen Stranggießanlagen an einer Phasengrenzfläche zwischen flüssigem Stahl und dem umgebenden Gas, sondern in einer zusammenhängenden flüssigen Phase. Dies erfordert spezielle Lösungen, um sicherzustellen, dass eine definierte Erstarrung an einer bestimmten Stelle der Kokille erfolgt.

Der Verteiler selbst hat die Aufgabe, einen konstanten Schmelzfluss zu garantieren und die Schmelze gleichmäßig auf die Stränge zu verteilen. Der Übergang zur Kokille bildet ein Ofenstein, der fest im Ofen eingesetzt ist, und kokillenseitig eine Ausgussdüse, die aus einem hochwertigen feuerfesten Material, z.B. Zirkoniumdioxid, besteht, da sie hohe Wärmespannungen aufnehmen muss. An diese Ausgussdüse schließt sich der Abreiß- oder Brechring an, der ein für den Horizontal-Strangguss charakteristisches Bauteil ist. Dieser Abreißring muss im Dauerbetrieb gewährleisten, dass ab dieser Stelle die Bildung der Strangschale beginnt. Er dient somit dazu, den Ort der Erstarrung genau in der Kokille festzulegen. Da nicht zu vermeiden ist, dass sich am Abreißring selbst ebenfalls eine Schale bildet, muss diese leicht ablösbar sein und darf mit dem Material des Abreißringes keine Zwischenphase bilden. Außerdem wird eine hohe Thermoschockbeständigkeit und hohe Abriebfestigkeit verlangt.

Das Verfahren zum Dünnbandgießen ist beispielsweise in EP546206A1 beschrieben.

Die in diesen Anwendungen sowie als Seitenplatten für das Dünnbandgießen von Stahl eingesetzten Materialien müssen sich durch einen hohen Widerstand gegen Korrosion durch flüssigen Stahl, hohe Verschleißbeständigkeit gegenüber fließender Stahlschmelze und hohe Thermoschockbeständigkeit bei den Einsatztemperaturen über 1500°C auszeichnen. Weiterhin ist bei den Seitenplatten (Side Dams) der mechanische Verschleiß durch die Rollen so einzustellen, dass sowohl eine abdichtende Wirkung gegenüber der Stahlschmelze gewährleistet ist als auch eine möglichst lange Lebensdauer der Seitenplatten. In beiden Anwendungen ist die Wärmeleitfähigkeit des Materials so zu wählen, dass keine vorzeitige Erstarrung der Stahlschmelze eintritt, die zu einer Verminderung der Stahlqualität führt.

### Stand der Technik

Die EP 0 353 542 B1 beschreibt polykristalline Mischwerkstoffe auf Basis von Bornitrid, welche einen Zusatz von 10 bis 50 Gew.-% Zirkonoxid oder Magnesiumoxid und 5 bis 20 Gew.-% eines Carbids, wie Siliciumcarbid, enthalten. Dieser Werkstoff zeichnet sich durch hohe Temperaturwechselbeständigkeit und Korrosionsbeständigkeit aus und wird üblicherweise für Ablöseringe und Seitenplatten für das Dünnbandgießen von Stahl verwendet. Allerdings ist die Wärmeleitfähigkeit, bedingt durch den Zusatz von Carbiden und den geringen Zirkonoxidgehalt, zu hoch für den Einsatz mit einigen Stahlsorten. Zudem ist die Härte dieses Werkstoffs nicht sehr hoch, so dass seine Verschleißbeständigkeit begrenzt ist.

Die EP-A-0 195 417 beschreibt eine Mischkeramik für die Verwendung als Abreiß- oder Brechringe mit 1 bis 70 Gew.-% Oxiden aus der Gruppe Zirkonoxid, Magnesiumoxid, Aluminiumoxid und Siliciumoxid, und dem Rest (30-99 Gew.-%) Bornitrid. Das einzige Zirkonoxid enthaltende Ausführungsbeispiel beschreibt die Herstellung eines Mischwerkstoffes aus einem Pulvergemisch aus 30 Gew.-% Zirkonoxid, 68 Gew.-% Bornitrid und 2 Gew.-% eines temporären Bindemittels. Dieser Werkstoff hat jedoch schlechtere mechanische Eigenschaften als die aus EP 0 353 542 B1 bekannten Werkstoffe, welche einen Zusatz an Carbiden enthalten. Für einige Anwendungen ist weiterhin die Wärmeleitfähigkeit zu hoch. Die Biegebruchfestigkeit des Werkstoffs aus diesem Beispiel beträgt weiterhin lediglich 77 MPa. Ferner ist die Härte dieses Werkstoffs vergleichsweise niedrig. Da aus der Härte auf die Verschleißbeständigkeit geschlossen werden kann, ist somit die Verschleißbeständigkeit dieser Werkstoffe nicht zufriedenstellend, insbesondere für die Verwendung als Seitenplatten.

Die JP 53-45312 beschreibt Werkstoffe aus 30 bis 90 Gew.-% stabilisiertem Zirkoniumdioxid und 10 bis 70 Gew.-% Bornitrid. Als Stabilisator für das Zirkoniumdioxid können hierbei CaO, MgO und Y₂O₃ eingesetzt werden. Als Begründung für den Einsatz von stabilisiertem Zirkoniumdioxid wird angegeben, dass sich der Werkstoff bei Temperaturerhöhung nicht ungewöhnlich ausdehnt oder zusammenzieht. Die mechanischen Eigenschaften dieses Werkstoffes sind ebenfalls nicht völlig zufriedenstellend. Zudem führt die Verwendung von stabilisiertem Zirkoniumdioxid zu höheren Kosten für diesen Werkstoff.

### Aufgabe der Erfindung

Der Erfindung liegt daher die Aufgabe zugrunde, einen Werkstoff auf Basis von Bornitrid für metallurgische Anwendungen zur Verfügung zu stellen, der verbesserte mechanische Eigenschaften, insbesondere verbesserte Biegefestigkeit, aufweist, bei gleichzeitig höherer Härte, niedrigerer Wärmeleitfähigkeit und guter Thermoschockbeständigkeit und somit einen Werkstoff mit verbesserter Verschleißbeständigkeit bei gleichzeitig niedrigerer Wärmeleitfähigkeit. Ferner soll ein solcher Werkstoff durch ein einfaches und kostengünstiges Verfahren herstellbar sein.

### Zusammenfassung der Erfindung

Die vorstehende Aufgabe wird erfindungsgemäß gelöst durch gesinterte polykristalline Mischwerkstoffe gemäß Anspruch 1, ein Verfahren zur Herstellung solcher Mischwerkstoffe gemäß Anspruch 4, sowie die Verwendung dieser Mischwerkstoffe gemäß Anspruch 9.

Gegenstand der Erfindung sind somit gesinterte polykristalline Mischwerkstoffe auf Basis von Bornitrid und Zirkoniumdioxid, in denen der Anteil an Zirkoniumdioxid in Form von unstabilisiertem Zirkoniumdioxid 58 bis < 70 Gew.-% und der Anteil an Bornitrid > 30 bis 42 Gew.-% beträgt.

Gegenstand der Erfindung ist weiterhin ein Verfahren zur Herstellung solcher Mischwerkstoffe, bei dem Pulvergemische aus Bornitrid und unstabilisiertem Zirkoniumdioxid in den entsprechenden Anteilen bei Temperaturen im Bereich von 1500 bis 1800°C und einem Druck von 10 bis 30 MPa heißgepresst werden.

Die erfindungsgemäßen Mischwerkstoffe eignen sich für metallurgische Anwendungen, insbesondere als Seitenplatten (Side Dams) für das Dünnbandgießen von Stahl und als Ablöse- oder Brechringe beim horizontalen Stranggießen von Stahl gemäß Anspruch 9.

Gemäß der Erfindung hat sich überraschenderweise gezeigt, dass trotz der Verwendung von unstabilisiertem Zirkoniumdioxid die Werkstoffe oberhalb von 1170°C sinterbar sind und dass zudem verbesserte mechanische Eigenschaften sowie eine niedrigere Wärmeleitfähigkeit als bei den im Stand der Technik bekannten Werkstoffen erreicht werden. Insbesondere zeichnen sich die erfindungsgemäßen Werkstoffe durch eine verbesserte Festigkeit und höhere Härte in Kombination mit niedrigerer Wärmeleitfähigkeit aus. Durch diese niedrigere Wärmeleitfähigkeit kommt es zu einer geringeren Erstarrung der Stahlschmelze an den Seitenplatten. Wenn es nämlich zu solchen Erstarrungen kommt, können sich die erstarrten Schmelzbereiche ablösen und dadurch die Stahlreinheit vermindern, außerdem führen solche Ablösungen zu gestörten Kanten des resultierenden erstarrten Stahls, was zu Qualitätseinbußen führt. Durch die erfindungsgemäßen Werkstoffe können diese Nachteile vermieden werden. Außerdem lassen sich mit den erfindungsgemäßen Werkstoffen Stahlsorten verarbeiten, die mit den Werkstoffen des Standes der Technik nicht zu verarbeiten sind. Die erfindungsgemäßen Werkstoffe haben eine höhere Härte und somit eine bessere Verschleißbeständigkeit und eine geringere Abtragsrate in Kontakt mit der Stahlschmelze. Durch die höhere Festigkeit können beispielsweise Seitenplatten länger eingesetzt werden ohne Sicherheitsverlust, da die Restfestigkeit nach einem gewissen Abtrag im Bereich der Rollen einer Dünnbandgießanlage dann höher ist.

Durch die höhere Härte und höhere Festigkeit verlängert sich ebenfalls die Lebensdauer der aus den erfindungsgemäßen Werkstoffen hergestellten Seitenplatten oder Ablöse- bzw. Brechringe.

Ein weiterer Vorteil der erfindungsgemäßen Werkstoffe besteht darin, dass nicht stabilisiertes Zirkoniumdioxid eingesetzt werden kann, was einen wirtschaftlichen Vorteil bedeutet, da nicht stabilisiertes Zirkoniumdioxid preisgünstiger ist als stabilisiertes.

### Detaillierte Beschreibung der Erfindung

Wie bereits oben erwähnt, handelt es sich bei den erfindungsgemäßen polykristallinen Mischwerkstoffen bzw. Mischkeramiken um solche auf Basis von Bornitrid und Zirkoniumdioxid, in denen der Anteil an unstabilisiertem Zirkoniumdioxid 58 bis < 70 Gew.-%, vorzugsweise 60 bis 68 Gew.-%, und der Anteil an Bornitrid > 30 bis 42 Gew.-%, vorzugsweise 32 bis 40 Gew.-%, beträgt.

Die Sinterdichte der erfindungsgemäßen Mischwerkstoffe beträgt vorzugsweise ≥ 90%, weiter vorzugsweise ≥ 94% der theoretischen Dichte.

Zur Herstellung der erfindungsgemäßen Mischwerkstoffe können sowohl turbostratisches Bornitrid-Pulver, das vorzugsweise eine spezifische Oberfläche von 25 bis 100 m²/g (nach BET) aufweist, als auch hexagonales Bornitrid-Pulver, das vorzugsweise eine spezifische Oberfläche von 5 bis 30 m²/g (nach BET) aufweist, eingesetzt werden.

Der Sauerstoffgehalt des eingesetzten Bornitrid-Pulvers beträgt vorzugsweise < 10 Gew.-%, weiter vorzugsweise < 5 Gew.-%.

Gemäß einer weiteren Ausführungsform kann das Bornitrid-Pulver zu Bornitrid-Granalien geformt werden und diese Bornitrid-Granalien dann zur Herstellung des Mischwerkstoffes verwendet werden. Gegebenenfalls können die Bornitrid-Granalien auch bereits Zirkoniumdioxid enthalten. Weiterhin ist es möglich, den Bornitrid-Granalien weitere Zusatzstoffe, wie SiC, Sialon, Si₃N₄, Al₂O₃, SiO₂ und Kombinationen dieser Stoffe zuzusetzen.

Die Heißpressung der Pulvermischungen erfolgt geeigneterweise in Graphitmatrizen.

Die Biegebruchfestigkeit wird hierin mittels der 4-Punktmethode gemäß DIN EN 843-1 bestimmt. Weitere Einzelheiten hierzu sowie auch die hierin angewandten Methoden zur Bestimmung der Härte und der Wärmeleitfähigkeit sind in den Beispielen angegeben.

### Beispiele

Die nachfolgenden Beispiele dienen zur weiteren Erläuterung der Erfindung.

### Beispiel 1 (erfindungsgemäß)

Es wurde Bornitrid-Pulver von ESK mit einer spezifischen Oberfläche von 13 m²/g mit unstabilisiertem Zr02-Pulver der Firma Saint Gobain mit der Produktbezeichnung ZirPro CC10 und einer mittleren Partikelgröße von 3 µm (d50) eingesetzt. Die Ausgangspulver wurden mit einem Anteil von 60 Gew.% ZrO₂ und 40 Gew.% Bornitrid vermischt und bei einer Temperatur von 1650°C und einem Druck von 200 bar in einer Graphitmatritze heißgepresst. Nach dem Heißpressen hatte der Sinterkörper eine Abmessung von etwa 250x250x300 mm³. Die Sinterdichte betrug 3,35 g/cm³ entsprechend 95,7% der theoretischen Dichte von 3,5 g/cm³.

Aus dem Sinterkörper wurden durch Sägen und Trockenfeinschleifen Proben bearbeitet mit den Abmessungen 5x5x50mm³. Die Kanten wurden abgerundet. Mit diesen Proben wurden die Biegebruchfestigkeit (4-Punkt) gemäß DIN EN 843-1 gemessen. Der Abstand der Rollen betrug 20 mm und 40 mm. Die ermittelte Biegebruchfestigkeit betrug 149 MPa senkrecht zur Heißpressrichtung. Die Brinell-Härte (HBW 2,5/62,5, d.h. gemessen mit einem Kugeldurchmesser von 2,5 mm und einer Prüflast von 62,5 kg) betrug 103. Die Wärmeleitfähigkeit wurde mit der Vergleichsapparatur TCT 416 (Netzsch-Gerätebau GmbH) entsprechend DIN 51046 nahe Raumtemperatur gemessen.

Zur Ermittlung der Wärmeleitfähigkeit bei 1000°C wurden die spezifische Wärmekapazität cP, die Temperaturleitfähigkeit a, die Dichte rho und Wärmedehnung alpha gemessen und die Wärmeleitfähigkeit daraus berechnet. Die spezifische Wärmekapazität wurde über dynamische Differenzkalorimetrie nach DIN EN 821-3 mit einer DSC 404 (Netzsch-Gerätebau GmbH), die Temperaturleitfähigkeit mittel Laser-Flash-Analyse nach DIN EN 821-2 mit einem LFA 427 (Netzsch-Gerätebau GmbH), die Dichte geometrisch bei Raumtemperatur und die Wärmedehnung nach DIN EN 821-1 mit einem Dilatometer 402 E (Netzsch-Gerätebau GmbH) gemessen.

Die ermittelte Wärmeleitfähigkeit betrug bei Raumtemperatur 24,3 W/mK und bei 1000°C 13 W/mK.

Aus dem Sinterkörper wurden Proben der Abmessung 30x15x200 mm³ bearbeitet. Mit diesen Proben wurden Thermoschockversuche in einer Eisenschmelze bei 1450 °C durchgeführt. Die Zusammensetzung der Eisenschmelze war C 3,4 - 3,7 %, Si 2,2 - 2,8%, Mn < 0,35%, P < 0,06%, S < 0,012%, Mg 0,04 - 0,06%, Cu 0,8 - 1,2%, Ni 0,6 - 1,0%, Mo 0,3 - 0,5%, Sn 0,04 - 0,06%. Für die Thermoschockversuche wurden zwei Proben ohne Vorwärmung für 5 Sekunden in die Eisenschmelze getaucht und danach an Luft abgeschreckt. Eine Probe wurde ohne Vorwärmen 10 Sekunden in die Schmelze getaucht und danach unverzüglich in Wasser bei Raumtemperatur abgeschreckt. Die Eintauchtiefe betrug jeweils 2/3 der Probenlänge. In keinem Fall kam es zu Brüchen oder Rissen des Materials. Nach den Thermoschockversuchen wurde die Biegebruchfestigkeit ermittelt. Sie betrug 130 MPa, oder 87% bezogen auf den Ausgangswert (Mittelwert von 3 Proben).

### Beispiel 2 (erfindungsgemäß)

Der Versuch aus Beispiel 1 wurde wiederholt, jedoch wurden für die Pulvermischung 68 Gew.% ZrO2 und 32 Gew.% Bornitrid eingesetzt. Nach dem Heißpressen hatte der Sinterkörper eine Abmessung von etwa 250x250x300 mm³. Die Sinterdichte betrug 3,7 g/cm³ entsprechend 95,4% der theoretischen Dichte von 3,88 g/cm³.

Die Proben für die Biegefestigkeitsmessungen wurden wie in Beispiel 1 hergestellt. Die ermittelte Biegebruchfestigkeit betrug 165 MPa senkrecht zur Heißpressrichtung. Die Brinell-Härte (HBW 2,5/62,5) betrug 121. Die ermittelte Wärmeleitfähigkeit betrug bei Raumtemperatur 19,7 W/mK und bei 1000°C 9 W/mK.

Aus dem Sinterkörper wurden wie bei Beispiel 1 Proben der Abmessung 30x15x200 mm³ bearbeitet, und mit diesen Proben wurden wie in Beispiel 1 beschrieben Thermoschockversuche durchgeführt. In keinem Fall kam es zu Brüchen oder Rissen des Materials. Nach den Thermoschockversuchen wurde die Festigkeit ermittelt. Sie betrug 125 MPa, oder 76 % bezogen auf den Ausgangswert (Mittelwert von 3 Proben).

### Vergleichsbeispiel 1 (gemäß EP-A-0 195 417)

Der Versuch aus Beispiel 1 wurde wiederholt, jedoch wurden für die Pulvermischung 30 Gew.% ZrO2 und 70 Gew.% Bornitrid eingesetzt. Die Sinterdichte betrug 96% der theoretischen Dichte. Die Biegebruchfestigkeit betrug 77 MPa senkrecht zur Heißpressrichtung. Die Brinell-Härte betrug 41 HBW 2,5/ 15,625, die Wärmeleitfähigkeit betrug bei Raumtemperatur 50 W/mK und bei 1000°C 18 W/mK.

Aus dem Sinterkörper wurden wie bei Beispiel 1 Proben der Abmessung 30x15x200 mm³ bearbeitet, und mit diesen Proben wurden wie in Beispiel 1 beschrieben Thermoschockversuche durchgeführt. Nach den Thermoschockversuchen wurde die Festigkeit ermittelt. Sie betrug 52 MPa (Mittelwert von 3 Proben) oder 68% bezogen auf den Ausgangswert und lag damit sowohl absolut als auch relativ niedriger als bei den Vergleichswerten der erfindungsgemäßen Beispiele.

### Vergleichsbeispiel 2 (gemäß EP 0 353 342 B1)

Der Versuch aus Beispiel 1 wurde wiederholt, jedoch wurden für die Pulvermischung 35 Gew.% ZrO2, 10 Gew.% SiC und 55 Gew.% Bornitrid eingesetzt. Die Sinterdichte betrug 95% der theoretischen Dichte.

Die Biegebruchfestigkeit betrug 155 MPa senkrecht zur Heißpressrichtung. Die Brinell-Härte betrug 33 HBW 2,5/ 15,625, die Wärmeleitfähigkeit betrug bei Raumtemperatur 35 W/mK und bei 1000°C 14 W/mK.

Aus dem Sinterkörper wurden wie bei Beispiel 1 Proben der Abmessung 30x15x200 mm³ bearbeitet, und mit diesen Proben wurden wie in Beispiel 1 beschrieben Thermoschockversuche durchgeführt. Nach den Thermoschockversuchen wurde die Festigkeit ermittelt. Sie betrug 80 MPa (Mittelwert von 3 Proben) oder 52% bezogen auf den Ausgangswert und lag damit sowohl absolut als auch relativ niedriger als bei den Vergleichswerten der erfindungsgemäßen Beispiele.

## Patentansprüche

1. Gesinterte, polykristalline Mischwerkstoffe auf Basis von Bornitrid und Zirkoniumdioxid, in denen der Anteil an Zirkoniumdioxid in Form von unstabilisiertem Zirkoniumdioxid 58 bis < 70 Gew.-% und der Anteil an Bornitrid > 30 bis 42 Gew.-% beträgt.

2. Mischwerkstoffe nach Anspruch 1, in denen der Anteil an unstabilisiertem Zirkoniumdioxid 60 bis 68 Gew.-% und der Anteil an Bornitrid 32 bis 40 Gew.-% beträgt.

3. Mischwerkstoffe nach Anspruch 1 und/oder 2, mit einer Sinterdichte von ≥ 90%, vorzugsweise ≥ 94% der theoretischen Dichte.

4. Verfahren zur Herstellung der Mischwerkstoffe nach mindestens einem der Ansprüche 1 bis 3, bei dem Pulvergemische aus Bornitrid und unstabilisiertem Zirkoniumdioxid in den entsprechenden Anteilen bei Temperaturen im Bereich von 1500 bis 1800°C und einem Druck von 10 bis 30 MPa heißgepresst werden.

5. Verfahren nach Anspruch 4, wobei turbostratisches Bornitrid-Pulver, das vorzugsweise eine spezifische Oberfläche von 25-100 m²/g aufweist, oder hexagonales Bornitrid-Pulver, das vorzugsweise eine spezifische Oberfläche von 5-30 m²/g aufweist, eingesetzt wird.

6. Verfahren nach Anspruch 4 und/oder 5, wobei das Bornitrid-Pulver zu Bornitrid-Granalien geformt wird und diese Bornitrid-Granalien eingesetzt werden.

7. Verfahren nach mindestens einem der Ansprüche 4 bis 6, wobei Bornitrid-Pulver mit einem Sauerstoffgehalt von ≤ 10 Gew.-%, vorzugsweise ≤ 5 Gew.-%, eingesetzt werden.

8. Verfahren nach mindestens einem der Ansprüche 4 bis 7, wobei unstabilisiertes Zirkoniumdioxid-Pulver mit einer mittleren Partikelgröße ≤ 10 µm, vorzugsweise 2-5 µm, eingesetzt wird.

9. Verwendung der Mischwerkstoffe nach mindestens einem der Ansprüche 1 bis 5 für metallurgische Anwendungen, insbesondere als Seitenplatten für das Dünnbandgießen von Stahl oder als Abreiß- oder Brechringe beim horizontalen Stranggießen von Stahl.

## Claims

1. Sintered, polycrystalline mixed materials which are based on boron nitride and zirconium dioxide and in which the proportion of zirconium dioxide in the form of unstabilized zirconium dioxide is from 58 to < 70% by weight and the proportion of boron nitride is from > 30 to 42% by weight.

2. Mixed materials according to Claim 1, wherein the proportion of unstabilized zirconium dioxide is from 60 to 68% by weight and the proportion of boron nitride is from 32 to 40% by weight.

3. Mixed materials according to Claim 1 and/or 2 having a sintered density of ≥ 90%, preferably ≥ 94%, of the theoretical density.

4. Process for producing the mixed materials according to at least one of Claims 1 to 3, wherein powder mixtures of boron nitride and unstabilized zirconium dioxide in the appropriate proportions are hot pressed at temperatures in the range from 1500 to 1800°C and a pressure of from 10 to 30 MPa.

5. Process according to Claim 4, wherein turbostratic boron nitride powder which preferably has a specific surface area of 25-100 m²/g or hexagonal boron nitride powder which preferably has a specific surface area of 5-30 m²/g is used.

6. Process according to Claim 4 and/or 5, wherein the boron nitride powder is shaped to form boron nitride granules and these boron nitride granules are used.

7. Process according to at least one of Claims 4 to 6, wherein boron nitride powders having an oxygen content of ≤ 10% by weight, preferably ≤ 5% by weight, are used.

8. Process according to at least one of Claims 4 to 7, wherein unstabilized zirconium dioxide powder having an average particle size of ≤ 10 µm, preferably 2-5 µm, is used.

9. Use of the mixed materials according to at least one of Claims 1 to 5 for metallurgical applications, in particular as side plates for thin strip casting of steel or as pour-off or breaking rings in horizontal continuous casting of steel.

## Revendications

1. Matériaux mixtes polycristallins frittés à base de nitrure de bore et de dioxyde de zirconium, dans lesquels la proportion de dioxyde de zirconium est, sous la forme de dioxyde de zirconium non stabilisé, de 58 à < 70 % en poids et la proportion de nitrure de bore est > 30 à 42 % en poids.

2. Matériaux mixtes selon la revendication 1, dans lesquels la proportion de dioxyde de zirconium non stabilisé est de 60 à 68 % en poids et la proportion de nitrure de bore est de 32 à 40 % en poids.

3. Matériaux mixtes selon la revendication 1 et/ou 2, ayant une densité de frittage ≥ 90 %, de préférence ≥ 94 % de la densité théorique.

4. Procédé de fabrication de matériaux mixtes selon au moins l'une quelconque des revendications 1 à 3, dans lequel on presse à chaud des mélanges pulvérulents de nitrure de bore et de dioxyde de zirconium non stabilisé dans les proportions correspondantes, à des températures situées dans la plage de 1500 à 1800 °C et à une pression de 10 à 30 MPa.

5. Procédé selon la revendication 4, dans lequel on emploie de la poudre de nitrure de bore turbostratique, qui présente de préférence une surface spécifique de 25 à 100 m²/g, ou de la poudre de nitrure de bore hexagonale, qui présente de préférence une surface spécifique de 5 à 30 m²/g.

6. Procédé selon la revendication 4 et/ou 5, dans lequel on conforme la poudre de nitrure de bore en grenailles de nitrure de bore et on utilise ces grenailles de nitrure de bore.

7. Procédé selon au moins l'une quelconque des revendications 4 à 6, dans lequel on utilise de la poudre de nitrure de bore avec une teneur en oxygène ≤ 10 % en poids, de préférence ≤ 5 % en poids.

8. Procédé selon au moins l'une quelconque des revendications 4 à 7, dans lequel on utilise de la poudre de dioxyde de zirconium non stabilisé ayant une taille particulaire moyenne ≤ 10 µm, de préférence de 2 à 5 µm.

9. Utilisation des matériaux mixtes selon au moins l'une quelconque des revendications 1 à 5 pour des applications métallurgiques, en particulier comme plaques latérales pour la coulée de bandes minces d'acier ou comme anneaux d'arrachage ou de rupture en coulée continue horizontale d'acier.
